# EUROPEAN PATENT APPLICATION

(11) **EP 4 707 010 A1**
(43) Date of publication of application: **11.03.2026**
(21) Application number: 25196772.5
(22) Date of filing: 19.08.2025
(51) Int. Cl.: B60K 1/04, B60K 6/20

(54) **PLUG-IN HYBRID ELECTRIC VEHICLE**

(30) Priority: 29.08.2024 JP 2024147277
(71) Applicant: TOYOTA JIDOSHA KABUSHIKI KAISHA, Toyota-shi, Aichi-ken 471-8571 (JP)
(72) Inventor: KOYANAGI, Hirotaka, Aichi-ken, 471-8571 (JP)
(74) Representative: D Young & Co LLP

(57) **Abstract**

A pick-up truck type plug-in hybrid electric vehicle includes an engine compartment section having an engine compartment in which an engine is arranged longitudinally, a cabin section having a passenger compartment in which a seat is provided, and a cargo section having a truck bed that opens upward. The plug-in hybrid electric vehicle further includes a frame having left and right side members, and a vehicle on-board charging unit configured to convert electric power supplied from outside the vehicle and supply the converted electric power to the battery. The left and right side members extend in the vehicle longitudinal direction through a region in the cabin section that is below the passenger compartment and a region in the cargo section that is below the truck bed. The vehicle on-board charging unit is disposed in a region in the cabin section that is below a seat and above the side members.

## Description

### BACKGROUND

### 1. Field

The present disclosure relates to a pickup truck-type plug-in hybrid electric vehicle.

### 2. Description of Related Art

International Publication No. 2008/082012 discloses a plug-in hybrid electric vehicle (hereinafter referred to as PHEV) having a unibody vehicle body structure.

A PHEV includes two drive sources (an engine and a motor), as well as a high-capacity battery. A PHEV further includes high-voltage electrical units electrically connected to the battery. Examples of such high-voltage electrical units include a power control unit for the motor and a vehicle on-board charging unit. In the PHEV described in the above publication, the battery is installed beneath the rear seat.

One known vehicle type is a pickup truck. A pickup truck includes a truck bed, which is rearward of the cabin and opens upward. Many pickup trucks include a body having a frame structure. A variety of components, including a transmission, a propeller shaft, an exhaust pipe, and a fuel tank, are disposed beneath the floor of a pickup truck. Therefore, when converting a pickup truck into a PHEV, it may be necessary to raise the floor height in order to provide space beneath the floor for accommodating a battery and a high-voltage electrical unit. However, users expect a pickup truck-type vehicle to include a cabin and a truck bed capable of carrying large-volume loads. Raising the floor to accommodate the battery and a high-voltage electrical unit reduces the available volume of the cabin and the truck bed, making it difficult to meet user demands.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a pickup truck-type plug-in hybrid electric vehicle includes an engine configured to generate, through combustion of fuel, rotational driving force to be transmitted to a wheel, a battery configured to be charged with electric power supplied from outside the vehicle, a motor configured to generate, using electric power supplied from the battery, rotational driving force that is transmitted to the wheel, a vehicle on-board charging unit configured to convert electric power supplied from outside the vehicle and supply the converted electric power to the battery, a power control unit configured to control electric power supplied to the motor, a cabin section, an engine compartment section forward of the cabin section, a cargo section rearward of the cabin section, and a frame including left and right side members. The cabin section includes a passenger compartment provided with a seat configured to allow an occupant to sit thereon. The engine compartment section includes an engine compartment in which the engine is arranged longitudinally. The cargo section includes a truck bed that opens upward. The left and right side members extend in a vehicle longitudinal direction through a region in the cabin section that is below the passenger compartment and a region in the cargo section that is below the truck bed. The vehicle on-board charging unit is disposed in a region in the cabin section that is below the seat and above the side members.

Other features and aspects will be apparent from the following detailed description, the drawings, and the claims.

### BRIEF DESCRIPTION OF THE DRAWINGS

Fig. 1 is a side view showing the arrangement of various components of a plug-in hybrid electric vehicle according to a first embodiment.
Fig. 2 is a top view showing the arrangement of a drivetrain and an underfloor structure of the plug-in hybrid electric vehicle shown in Fig. 1.
Fig. 3 is a top view showing the arrangement of a battery, a power control unit, and a vehicle on-board charging unit of the plug-in hybrid electric vehicle shown in Fig. 1.
Fig. 4 is a perspective view showing the arrangement of the battery, the power control unit, and the vehicle on-board charging unit of the plug-in hybrid electric vehicle shown in Fig. 1.
Fig. 5 is a perspective view showing the arrangement of a battery, a power control unit, and a vehicle on-board charging unit of a modification of the plug-in hybrid electric vehicle shown in Fig. 1.
Fig. 6 is a perspective view showing the arrangement of a battery, a power control unit, and a vehicle on-board charging unit of another modification of the plug-in hybrid electric vehicle shown in Fig. 1.
Fig. 7 is a side view showing the arrangement of various components of a plug-in hybrid electric vehicle according to a second embodiment.
Fig. 8 is a top view showing the arrangement of a drivetrain, a battery, a power control unit, a vehicle on-board charging unit, and other components of the plug-in hybrid electric vehicle shown in Fig. 7.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

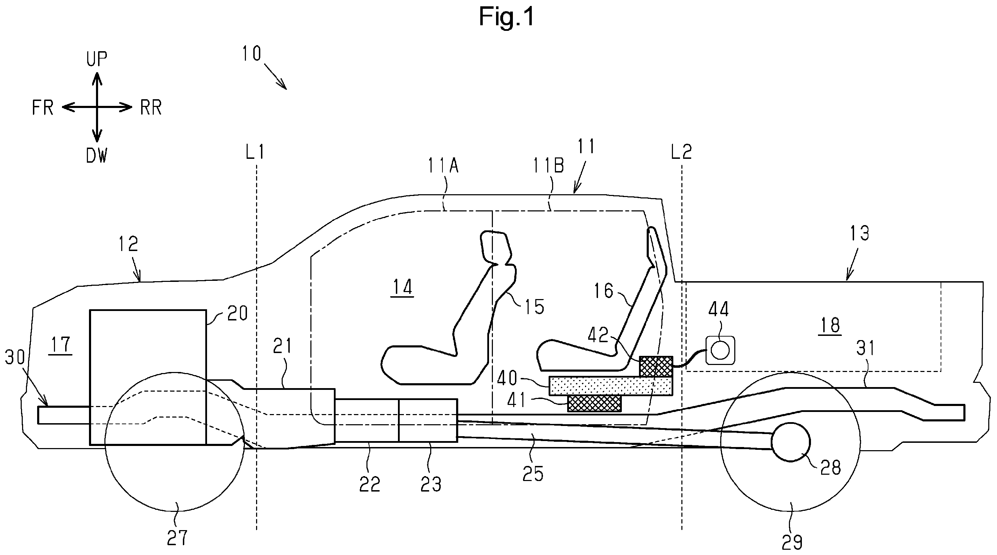

A plug-in hybrid electric vehicle 10 (hereinafter referred to as PHEV) according to a first embodiment will now be described with reference to Figs. 1 to 4. Arrows shown in the drawings indicate direction in relation to a PHEV 10. Specifically, FR indicates the forward direction, RR indicates the rearward direction, UP indicates the upward direction, DW indicates the downward direction, LF indicates the leftward direction, and RF indicates the rightward direction.

The PHEV 10 includes a battery 40 configured to be charged with electric power supplied from outside the vehicle. The PHEV 10 includes four wheels, i.e. left and right front wheels 27 and left and right rear wheels 29. The PHEV 10 includes an engine 20 and a motor 22 as drive sources that generate rotational driving force to be transmitted to the four wheels. The engine 20 generates rotational driving force through combustion of fuel. The motor 22 generates rotational driving force using electric power supplied from the battery 40.

The PHEV 10 of the present embodiment is configured as a pickup truck. The pickup truck-type PHEV 10 includes three sections, i.e., a cabin section 11, an engine compartment section 12 forward of the cabin section 11, and a cargo section 13 rearward of the cabin section 11. The cabin section 11 is provided with a passenger compartment 14, which accommodates occupants. The engine compartment section 12 includes an engine compartment 17 in which the engine 20 is arranged longitudinally. The PHEV 10 of the present embodiment is equipped with an engine 20 having a V-type cylinder arrangement. The cargo section 13 includes a truck bed 18 that opens upward.

In Figs. 1 to 4, the cabin section 11 is a region in the PHEV 10 that is rearward of dotted line L1 and forward of dotted line L2. The engine compartment section 12 is a region in the PHEV 10 that is forward of dotted line L1. The cargo section 13 is a region in the PHEV 10 that is rearward of dotted line L2. Front-row seats 15 and a rear-row seat 16, which is positioned rearward of the front-row seats 15, are installed as seats on which occupants are seated in the passenger compartment 14 of the PHEV 10. Front and rear doors 11A and 11B are provided on the left and right sides of the cabin section 11 of the PHEV 10. In the PHEV 10 of the present embodiment, the regions of the side surfaces of the cabin section 11 where the doors 11A and 11B are provided serve as entry openings for occupants.

The PHEV 10 is provided with a charging inlet 44 for receiving a charging plug of a charging device outside the vehicle. The charging inlet 44 is provided in a region in a side surface of the PHEV 10 that is rearward of the door 11B. In Fig. 1, the charging inlet 44 is provided on the side surface of the cargo section 13 on a vehicle left side.

### Configuration of Drivetrain

Next, the configuration of the drivetrain of the PHEV 10 will be described. The drivetrain of the PHEV 10 includes the engine 20, a transmission 21, a motor 22, and a transfer case 23. The drivetrain of the PHEV 10 includes propeller shafts 24 and 25 for the front and rear wheels. The propeller shafts 24 and 25 are each connected to the engine 20 via the transfer case 23, the motor 22, and the transmission 21. The propeller shaft 24 for the front wheels is connected to right and left front wheels 27 via a differential 26. The propeller shaft 25 for the rear wheels is connected to right and left rear wheels 29 via a differential 28.

### Configuration of Underfloor Structure

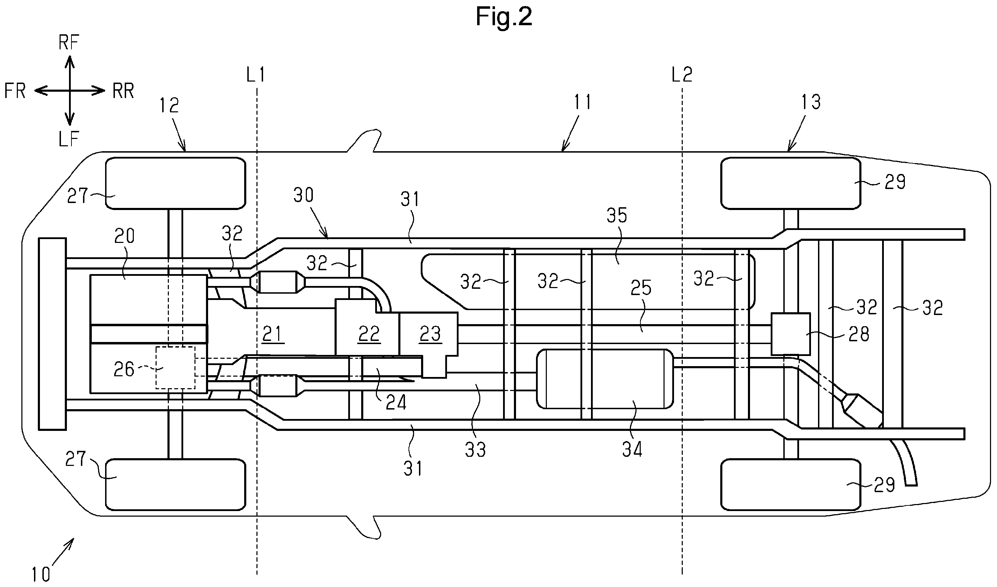

The configuration of the underfloor structure of the PHEV 10 will now be described with reference to Fig. 2. The space under the floor of the PHEV 10 refers to a region below floor panels of the passenger compartment 14 and the truck bed 18.

A frame 30 is provided under the floor of the passenger compartment 14 and the truck bed 18 of the PHEV 10. The frame 30 of the PHEV 10 of the present embodiment is a ladder-type frame having left and right side members 31 and multiple cross members 32 each connecting the side members 31 to each other. The left and right side members 31 are each disposed so as to extend in the vehicle longitudinal direction through a region in the cabin section 11 that is below the passenger compartment 14. As shown in Fig. 2, the propeller shaft 25 for the rear wheels extends in the vehicle longitudinal direction through the region in the cabin section 11 that is below the passenger compartment 14.

Further, an exhaust pipe 33 that guides exhaust gas of the engine 20 rearward is disposed under the floor of the PHEV 10. The exhaust pipe 33 extends in the vehicle longitudinal direction through the region in the cabin section 11 that is below the passenger compartment 14. A muffler 34 is installed at an intermediate portion of the exhaust pipe 33. The muffler 34 is disposed in the region in the cabin section 11 that is below the passenger compartment 14. A fuel tank 35 for storing fuel for the engine 20 is installed under the floor of the PHEV 10. The propeller shaft 25 for the rear wheels is disposed in a region between the exhaust pipe 33 and the fuel tank 35 in the vehicle width direction.

### Configuration of Power Supply System

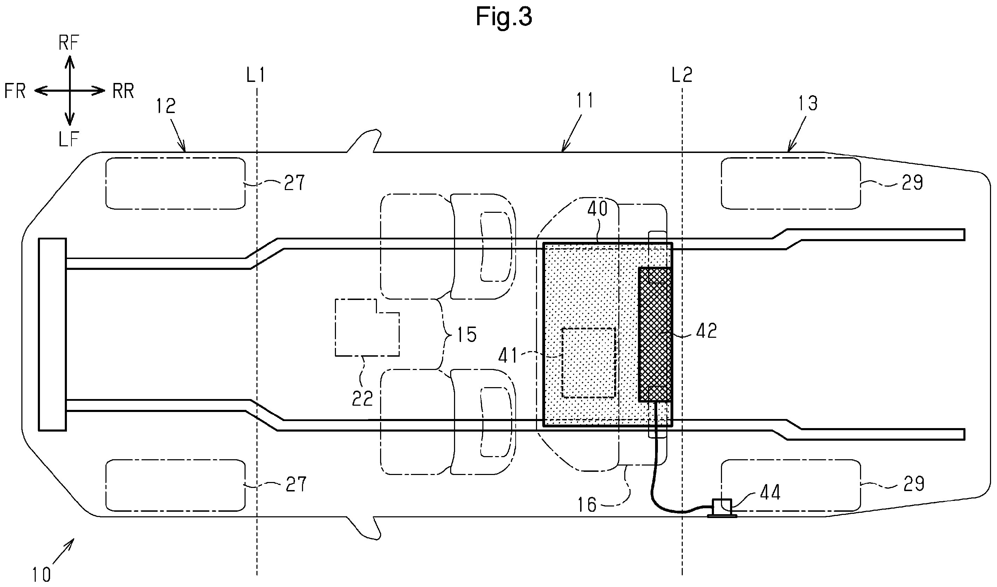

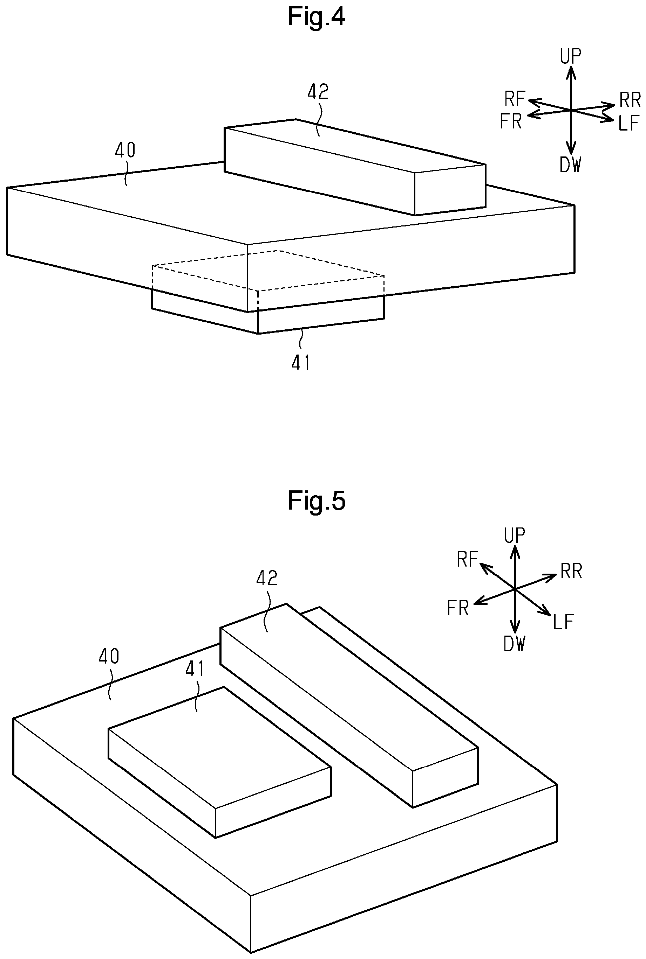

Next, the configuration of the power supply system of the PHEV 10 will be described with reference to Figs. 3 and 4.

The PHEV 10 includes a battery 40 configured to be charged with electric power supplied from outside the PHEV 10. The battery 40 includes multiple cells housed within a case. The battery 40 is connected to the motor 22 via the power control unit 41. The motor 22 generates rotational driving force to be transmitted to the front wheels 27 and the rear wheels 29 using electric power supplied from the battery 40. The power control unit 41 is a unit that performs power control of the motor 22, and includes components such as an inverter. The battery 40 is connected to the charging inlet 44 via a vehicle on-board charging unit 42. The vehicle on-board charging unit 42 functions as a vehicle on-board charger that charges the battery 40 by converting electric power supplied from the outside of the vehicle through the charging inlet 44 and supplying the converted electric power to the battery 40. The vehicle on-board charging unit 42 may also include a power conversion function that steps down the high-voltage power stored in the battery 40 and supplies it to low-voltage electrical devices of the PHEV 10.

In the PHEV 10 of the present embodiment, the battery 40, the power control unit 41, and the vehicle on-board charging unit 42 are disposed in a region in the cabin section 11 that is below the rear-row seat 16 and above the side members 31. As shown in Fig. 4, the power control unit 41 is installed below the battery 40 while being in contact with the lower surface of the battery 40. The vehicle on-board charging unit 42 is installed above the battery 40 while being in contact with the upper surface of the battery 40.

### Operation and Advantage of the First Embodiment

Operation and advantages of the PHEV 10 according to the present embodiment will now be described.

In the PHEV 10 of the present embodiment, the propeller shaft 25, the exhaust pipe 33, and the fuel tank 35 are disposed below the passenger compartment 14 and between the left and right side members 31. As a result, it is difficult to provide sufficient installation space beneath the floor of the PHEV 10 for the battery 40, the power control unit 41, and the vehicle on-board charging unit 42. However, in the PHEV 10 of the present embodiment, the battery 40, the power control unit 41, and the vehicle on-board charging unit 42 are disposed in a region in the cabin section 11 that is below the rear-row seat 16 and above the side members 31. Therefore, despite the presence of the frame 30, the propeller shaft 25, the exhaust pipe 33, and the fuel tank 35 under the floor, installation space for the battery 40, the power control unit 41, and the vehicle on-board charging unit 42 is ensured. If the battery 40, the power control unit 41, or the vehicle on-board charging unit 42 are installed on the floor panel of the passenger compartment 14 or the truck bed 18, the occupant space in the passenger compartment 14 or the cargo space of the truck bed 18 may be reduced. In this regard, if the battery 40, the power control unit 41, and the vehicle on-board charging unit 42 are disposed below the rear-row seat 16, the occupant space or the cargo space will not be reduced.

The PHEV 10 of the present embodiment described above has the following advantages.
(1) In the PHEV 10 of the present embodiment, the vehicle on-board charging unit 42 is disposed in a region in the cabin section 11 that is below the rear-row seat 16 and above the side members 31. As a result, the vehicle on-board charging unit 42 is not disposed under the floor, where the propeller shaft 25, the exhaust pipe 33, and the fuel tank 35 are installed. Instead, the vehicle on-board charging unit 42 is disposed in a region that is unlikely to interfere with the occupant space of the passenger compartment 14 or the cargo space in the truck bed 18. Accordingly, the PHEV 10 of the present embodiment facilitates providing installation space for the vehicle on-board charging unit 42.
(2) The battery 40 and the power control unit 41 are also disposed in a region in the cabin section 11 that is below the rear-row seat 16 and above the side members 31. Accordingly, the PHEV 10 of the present embodiment facilitates providing installation space for the battery 40 and the power control unit 41, in addition to the vehicle on-board charging unit 42.
(3) In the PHEV 10 of the present embodiment, the vehicle on-board charging unit 42 is disposed above the battery 40, and the power control unit 41 is disposed below the battery 40. In some cases, a space in which both the power control unit 41 and the vehicle on-board charging unit 42 can be mounted cannot be provided above or below the battery 40. Even in such cases, installation space for the power control unit 41 and the vehicle on-board charging unit 42 is ensured by arranging the power control unit 41 and the vehicle on-board charging unit 42 respectively above and below the battery 40.
(4) In the PHEV 10 of the present embodiment, the vehicle on-board charging unit 42 is disposed above the battery 40. As a result, the likelihood of the vehicle on-board charging unit 42 interfering with the road surface or being struck by flying debris is reduced.
(5) Wiring for connecting the power control unit 41 to the motor 22 must be routed beneath the floor of the passenger compartment 14. Therefore, if the power control unit 41 were disposed above the battery 40, the wiring would need to be routed around the side of the battery 40. In contrast, in the PHEV 10 of the present embodiment, the power control unit 41 is disposed below the battery 40. As a result, routing the wiring between the motor 22 and the power control unit 41 is simplified.

### Modifications of the First Embodiment

The first embodiment may be modified as follows. The first embodiment and the following modifications can be combined as long as the combined modifications remain technically consistent with each other.

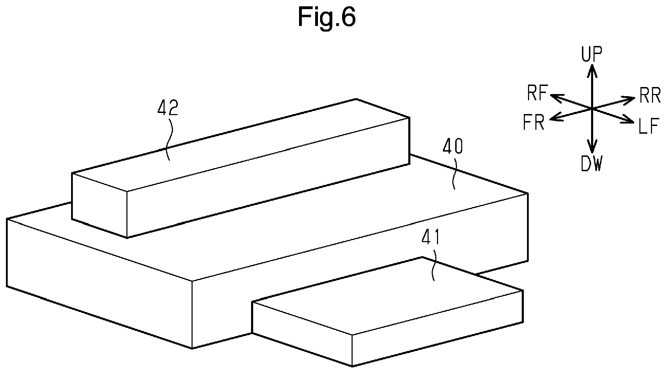

As shown in Figs. 5 and 6, the arrangement of the battery 40, the power control unit 41, and the vehicle on-board charging unit 42 may be changed. In the modification shown in Fig. 5, both the power control unit 41 and the vehicle on-board charging unit 42 are disposed above the battery 40. In this case, since the battery 40 is interposed, the power control unit 41 and the vehicle on-board charging unit 42, which are high-voltage electrical devices, are less likely to interfere with the road surface and be struck by flying debris. In the modification shown in Fig. 6, the vehicle on-board charging unit 42 is disposed above the battery 40, and the power control unit 41 is disposed on a side of the battery 40. In this case, routing the wiring between the motor 22 and the power control unit 41 is simplified.

One or both of the battery 40 and the power control unit 41 may be disposed at a location different from a location below the rear-row seat 16 and above the side members 31. For example, the power control unit 41 may be disposed integrally with the motor 22, or the battery 40 may be disposed in the cargo section 13.

The arrangement of components such as the propeller shaft 25, the exhaust pipe 33, the muffler 34, and the fuel tank 35 under the floor of the PHEV 10 may be changed. For example, the propeller shaft 25 may be disposed in a region other than the space between the exhaust pipe 33 and the fuel tank 35 in the vehicle width direction.

### Second Embodiment

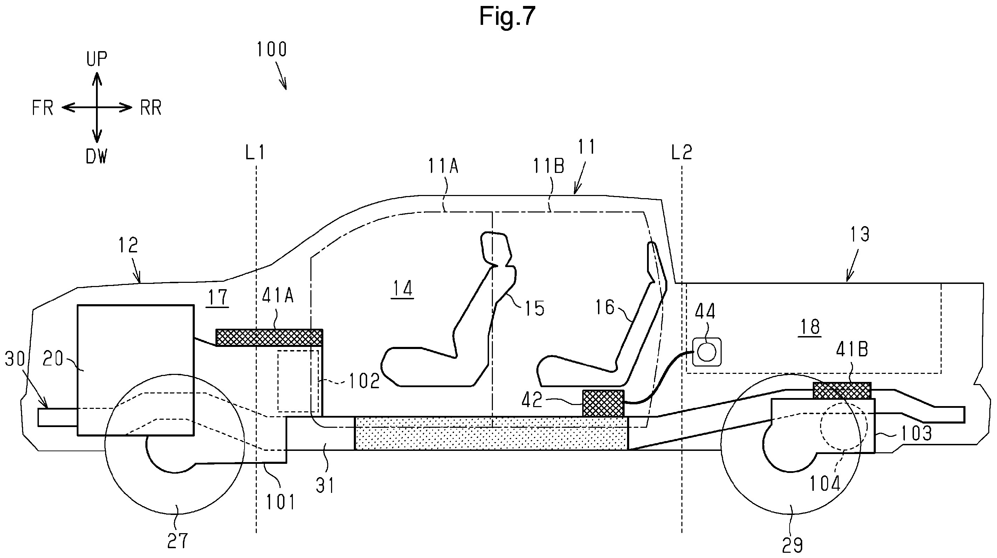

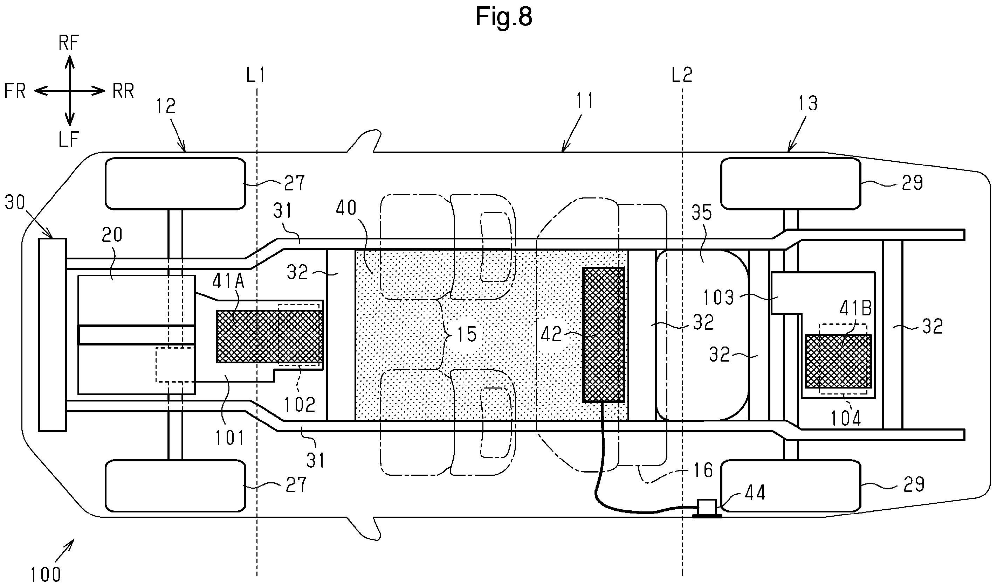

Next, a plug-in hybrid electric vehicle (PHEV) 100 according to a second embodiment will be described with reference to Figs. 7 and 8. In the present embodiment, like or the same reference numerals are given to those components that are like or the same as the corresponding components of the above-described embodiments, and the detailed description will be omitted. Fig. 7 is a side view showing the arrangement of the drivetrain and the electric system of the PHEV 100 of the present embodiment. Fig. 8 is a top view showing the arrangement of the drivetrain and the electric system of the PHEV 100 of the present embodiment.

Similarly to the PHEV 10 of the first embodiment, the PHEV 100 of the present embodiment is also configured as a pickup truck having three sections, i.e., a cabin section 11, an engine compartment section 12, and a cargo section 13. A passenger compartment 14 in which front-row seats 15 and a rear-row seat 16 are installed is provided in the cabin section 11, an engine compartment 17 in which an engine 20 is arranged longitudinally is provided in the engine compartment section 12, and a truck bed 18 that opens upward is provided in the cargo section 13. A charging inlet 44 is provided on a side surface of the PHEV 100 at a position rearward of a door 11B.

### Configuration of Drivetrain

The configuration of the drivetrain of the PHEV 100 will now be described. The PHEV 100 includes two independent drivetrains, one for front wheels 27 and one for rear wheels 29.

The front wheels 27 of the PHEV 100 are coupled to the engine 20 via a drive module 101 disposed near the front wheels 27. The drive module 101 integrates the components of the drivetrain for the front wheels 27. The drive module 101 incorporates a front-wheel motor 102 that generates rotational driving force to be transmitted to the front wheels 27. Further, the drive module 101 incorporates a transmission, a differential, and the like.

The rear wheels 29 of the PHEV 100 are coupled to a drive module 103 disposed near the rear wheels 29. The drive module 103 integrates the components of the drivetrain for the rear wheels 29. The drive module 103 incorporates a rear-wheel motor 104 that generates rotational driving force to be transmitted to the rear wheels 29. Further, the drive module 103 incorporates a speed reducer, a differential, and the like.

### Configuration of Power Supply System

Next, the configuration of the power supply system of the PHEV 100 will be described. Unlike the PHEV 10 of the first embodiment, the PHEV 100 of the present embodiment has independent drivetrains for the front wheels 27 and the rear wheels 29. The PHEV 100 does not include a propeller shaft extending in the vehicle longitudinal direction through a region in the cabin section 11 that is below the passenger compartment 14. The PHEV 100 includes a battery 40 disposed in a lower portion of the passenger compartment 14 in the cabin section 11. Specifically, the battery 40 is disposed in a lower portion of the passenger compartment 14 that is between the left and right side members 31. The fuel tank 35 of the PHEV 100 of the present embodiment is disposed between the left and right side members 31 and rearward of the battery 40.

The PHEV 100 includes individual power control units 41A and 41B for the two motors 102 and 104 for the front wheels and the rear wheels, respectively. The power control unit 41A that controls the motor 102 for the front wheels is disposed above the drive module 101, which incorporates the motor 102 for the front wheels. The power control unit 41B that controls the motor 104 for the rear wheels is disposed above the drive module 103, which incorporates the motor 104 for the rear wheels. The power control unit 41A is installed in an integrated manner with the drive module 101. The power control unit 41B is installed in an integrated manner with the drive module 103.

Furthermore, the PHEV 100 is equipped with a vehicle on-board charging unit 42. The vehicle on-board charging unit 42 is disposed in a region in the cabin section 11 that is below the rear-row seat 16 and above the side members 31.

### Advantages of the Second Embodiment

The PHEV 100 of the present embodiment described above has the following advantages.
(1) In the PHEV 100 of the present embodiment, the vehicle on-board charging unit 42 is disposed in a region in the cabin section 11 that is below the rear-row seat 16 and above the side members 31. This facilitates providing installation space for the vehicle on-board charging unit 42.
(2) The vehicle on-board charging unit 42 is disposed above the battery 40. As a result, the likelihood of the vehicle on-board charging unit 42 interfering with the road surface or being struck by flying debris is reduced.
(3) The power control units 41A, 41B are disposed above the motors 102, 104, respectively, which are targets of electric power control. This configuration facilitates wiring between each motor 102, 104 and its respective power control unit 41A, 41B.

### Other Embodiments

The above-described embodiments may be modified as follows. The above-described embodiments and the following modifications can be combined if the combined modifications remain technically consistent with each other.

If wiring for connecting the charging inlet 44 to the vehicle on-board charging unit 42 can be routed appropriately, the charging inlet 44 may be installed at a location different from that in the above-described embodiments.

As the engine 20, an engine having a cylinder arrangement other than the V type may be employed. The engine 20 may be transversely mounted within the engine compartment 17.

In the passenger compartment 14 of the PHEVs 10, 100, two rows of seats are arranged in the front-rear direction, but the layout of the seats can be changed.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A pickup truck-type plug-in hybrid electric vehicle (10; 100), comprising:
an engine (20) configured to generate, through combustion of fuel, rotational driving force to be transmitted to a wheel (27, 29);
a battery (40) configured to be charged with electric power supplied from outside the vehicle (10; 100);
a motor (22; 102, 104) configured to generate, using electric power supplied from the battery (40), rotational driving force that is transmitted to the wheel (27, 29);
a vehicle on-board charging unit (42) configured to convert electric power supplied from outside the vehicle (10; 100) and supply the converted electric power to the battery (40);
a power control unit (41; 41A, 41B) configured to control electric power supplied to the motor (22; 102, 104);
a cabin section (11);
an engine compartment section (12) forward of the cabin section (11);
a cargo section (13) rearward of the cabin section (11); and
a frame (30) including left and right side members (31), wherein
the cabin section (11) includes a passenger compartment (14) provided with a seat (15, 16) configured to allow an occupant to sit thereon,
the engine compartment section (12) includes an engine compartment (17) in which the engine (20) is arranged longitudinally,
the cargo section (13) includes a truck bed (18) that opens upward,
the left and right side members (31) extend in a vehicle longitudinal direction through a region in the cabin section (11) that is below the passenger compartment (14) and a region in the cargo section (13) that is below the truck bed (18), and
the vehicle on-board charging unit (42) is disposed in a region in the cabin section (11) that is below the seat (15, 16) and above the side members (31).

2. The plug-in hybrid electric vehicle (10; 100) according to claim 1, wherein the battery (40) and the power control unit (41; 41A, 41B) are disposed in a region in the cabin section (11) that is below the seat (15, 16) and above the side members (31).

3. The plug-in hybrid electric vehicle (10; 100) according to claim 2, wherein the vehicle on-board charging unit (42) and the power control unit (41; 41A, 41B) are disposed above the battery (40).

4. The plug-in hybrid electric vehicle (10; 100) according to claim 2, wherein the vehicle on-board charging unit (42) is disposed above the battery (40), and the power control unit (41; 41A, 41B) is disposed below the battery (40).

5. The plug-in hybrid electric vehicle (10; 100) according to claim 2, wherein the vehicle on-board charging unit (42) is disposed above the battery (40), and the power control unit (41; 41A, 41B) is disposed on a side of the battery (40).

6. The plug-in hybrid electric vehicle (10) according to any one of claims 1 to 5, further comprising:
a transmission (21);
a propeller shaft (25) coupled to the engine (20) via the transmission (21) and the motor (22);
an exhaust pipe (33) configured to guide exhaust gas of the engine (20) rearward in the vehicle (10); and
a fuel tank (35) configured to store the fuel,
wherein the propeller shaft (25), the exhaust pipe (33), and the fuel tank (35) are disposed between the left and right side members (31).

7. The plug-in hybrid electric vehicle (100) according to any one of claims 1 to 5, wherein the battery (40) is disposed between the left and right side members (31), and the power control unit (41A, 41B) is disposed above the motor (102, 104).
